# EUROPÄISCHE PATENTANMELDUNG

(11) **EP 1 254 854 A1**
(43) Veröffentlichungstag der Anmeldung: **06.11.2002**
(21) Anmeldenummer: 02007743.4
(22) Anmeldetag: 05.04.2002
(51) Int. Cl.: B65G 47/91

(54) **Handhabungsvorrichtung zur Manipulation plattenförmiger Gegenstände**

(30) Priorität: 03.05.2001 DE 20107571 U
(71) Anmelder: PAUL OTT GmbH, 4650 Lambach (AT)
(72) Erfinder: Kaser, Hans, 46471 (AT); Pittrich, Gerhard, 4702 Wallern an der Trattnach (AT)
(74) Vertreter: Hano, Christian, Dipl.-Ing.

(57) **Zusammenfassung**

Die Handhabungsvorrichtung dient zur Manipulation plattenförmiger Gegenstände und weist einen bewegbaren Aufnahmekopf (30) auf, dessen Bewegung von einer Steuereinrichtung gesteuert wird und an dessen Unterseite eine Vielzahl von Saugeinrichtungen (36) in einem definierten Raster in einer Ebene vorgesehen sind, die über eine serielle Datenleitung mit der Steuereinrichtung verbunden sind. Alle Saugeinrichtungen (36) sind selektiv und einzeln mittels der Steuereinrichtung aktivierbar und deaktivierbar.

## Beschreibung

Die Erfindung betrifft eine Handhabungsvorrichtung zur Manipulation plattenförmiger Gegenstände, insbesondere eine Handhabungsvorrichtung für den Transport von Möbelplatten, zum Beschicken und Entladen einer Kantenanleimmaschine und/oder zum Abstapeln und Sortieren von Möbelplatten.

Mit einseitigen Kantenanleimmaschinen wird in einem Durchlauf jeweils eine Kante an einer Seite eines in der Regel rechteckigen plattenförmigen Werkstücks angeleimt. Zur Anleimung einer Kante auf allen vier Seiten des Werkstückes muß das Werkstück daher die Kantenanleimmaschine viermal in um 90° versetzten Lagen durchlaufen. Die Kanten sind in der Mehrzahl an allen vier Seiten gleich, sie können jedoch auch unterschiedlich sein.

Zur Werkstückrückführung ist es beispielsweise aus dem Prospekt "Werkstückrückführungen Baureihe ZHR" der Ligmatech Maschinenbau GmbH bekannt, am Auslauf einer Kantenanleimmaschine eine Hubvorrichtung vorzusehen, die ein aus der Kantenanleimmaschine auslaufendes Werkstück auf eine oberhalb der Bearbeitungsebene der Kantenanleimmaschine angeordnete Rückführbahn anhebt, die in Richtung des Einlaufes leicht geneigt ist. Antriebsrollen der Rücklaufbahn setzen das Werkstück in Bewegung. Aufgrund der Neigung rollt das Werkstück zu einer Bedienungsperson zurück, die sich am Einlauf der Kantenanleimmaschine befindet. Die Bedienungsperson nimmt dann das Werkstück von der Rücklaufbahn ab und legt es um 90° bzw. 180° versetzt in die Kantenanleimmaschine ein. Kleinere Werkstücke können auch über eine eigene Drehvorrichtung automatisch gedreht werden.

Darüber hinaus ist es aus einem Prospekt der Bargstedt Maschinen- und Anlagenbau GmbH bekannt, am Ende der Kantenanleimmaschine einen Riementransport mit Auszugsvorrichtung vorzusehen, der ein Werkstück am Auslauf der Kantenanleimmaschine auf einen Lufttisch befördert, der leicht geneigt ist. Das Werkstück wird durch eigene Schwerkraft und einen Lufttisch auf eine tiefere Ebene bewegt und anschließend über ein Förderband in Richtung des Einlaufes der Kantenanleimmaschine zurückbewegt. Auch bei dieser Vorrichtung wird das Werkstück von einer Bedienungsperson abgenommen und um 90° bzw. 180° versetzt wieder in die Kantenanleimmaschine eingelegt.

Bei den bekannten Rückführeinrichtungen ist stets eine Bedienungsperson für ein Wiedereinlegen der Werkstücke in die Kantenanleimmaschine erforderlich. Darüber hinaus besteht keine Automatisierungs- und Einbindungsmöglichkeit in Produktionssteuersysteme. Beispielsweise müssen die Werkstücke von einer vorgeschalteten Plattensäge zur Kantenanleimmaschine befördert werden. Nachdem alle Kanten eines Werkstückes beleimt sind, muss das Werkstück von der Bedienungsperson zu einer nachfolgenden Ablage oder einer Bohrvorrichtung transportiert werden. Schließlich ist keine Einbindung in eine Logistikintelligenz möglich.

Darüber hinaus sind Handhabungsvorrichtungen bekannt, die an ihrer Unterseite Unterdruckeinrichtungen aufweisen, die gleichzeitig zur Beförderung eines Werkstückes aktiviert werden. Zwar ist mit solchen Handhabungsvorrichtungen die gleichzeitige Aufnahme mehrerer Werkstücke möglich. Ein selektives Ablegen der Werkstücke kann mit diesen Handhabungsvorrichtungen jedoch nicht durchgeführt werden.

Grundsätzlich gilt bei allen genannten Lösungen, dass eine Automatisierung nur bei sehr einheitlichem Teilespektrum im Zuge einer Massen- bzw. Seriefertigung erreicht werden kann.

Der Erfindung liegt die Aufgabe zugrunde, mit konstruktiv einfachen Mitteln eine Handhabungsvorrichtung zur Manipulation plattenförmiger Gegenstände zu schaffen, die eine selektive Aufnahme und Ablage der plattenförmigen Gegenstände ermöglicht und die in eine Automatisierung einbindbar ist, so dass eine vollautomatischer Beschick- und Entladevorgang durchgeführt werden kann.

Diese Aufgabe wird erfindungsgemäß durch eine Handhabungsvorrichtung mit den Merkmalen des Patentanspruchs 1 gelöst.

Vorteilhafte Weiterbildungen der erfindungsgemäßen Handhabungsvorrichtung sind Gegenstand der Patentansprüche 2 bis 8.

Mit der erfindungsgemäßen Handhabungsvorrichtung ist es möglich, ein Werkstück oder mehrere Werkstücke gezielt aufzunehmen und an einem bestimmten Ort in einer exakten vorher bestimmten Position und Reihenfolge gleichzeitig oder nacheinander abzulegen. Da sowohl die Bewegung des Aufnahmekopfes als auch die selektive Aktivierung und Deaktivierung der Saugeinrichtungen durch die Steuereinrichtung durchgeführt wird, ist die Einbindung der Handhabungsvorrichtung in eine Automatisierung möglich.

Das selektive Aufnehmen und selektive Ablegen ist nötig, um Teile z.B. von einem Stapel abzunehmen zu können und je nach Optimierungsanforderung nach neuen Kriterien in neuer Reihenfolge zu den einzelnen Bearbeitungsstationen bzw. Maschinen zu bringen.

Bei Laserschneidmaschinen oder Wasserstrahlmaschinen müssen z.B. die fertig geschnittenen Teile aus Kapazitätsgründen mehrfach von den Schneidtischen aufgenommen werden, jedoch zum Stapeln einzeln übereinander geschlichtet und damit einzeln abgelegt werden. Das selektive Ansteuern der entsprechenden Saugnäpfe bei sehr variablen Konturen ist auf einfache Weise mit einer CAD-Anbindung zu lösen.

Die erfindungsgemäße Handhabungsvorrichtung ist beispielsweise zum Beschicken, Entladen und Abstapeln von Möbelplatten bei einer Kantenanleimmaschine geeignet. Sie kann mit einer vorgeschalteten Plattensäge oder einer nachgeschalteten Ablage beziehungsweise einer Bohrvorrichtung logistisch koordiniert werden.

Die Handhabungsvorrichtung kann auch zum Wechseln von Kantenmagazinen für Rollenkanten bei einer Kantenanleimmaschine verwendet werden. Darüber hinaus ist die erfindungsgemäße Handhabungsvorrichtung auch zum Entladen von plattenförmigen Gegenständen mit sehr variablen Konturen besonders geeignet, die mit einer Laserschneidemaschine oder einer Wasserstrahlschneidmaschine leicht erzeugt werden können.

Die Saugeinrichtungen werden bevorzugt von Vakuumsaugtellem gebildet, die einzeln über eine serielle Datenleitung mit der Steuereinrichtung verbunden sind.

Zur positionsgenauen Aufnahme und Ablage plattenförmiger Gegenstände ist in dem Aufnahmekopf bei einer bevorzugten Ausführungsform eine Erfassungseinrichtung vorgesehen, die bevorzugt von einer Kamera gebildet wird, die Bildsignale an eine Bildbearbeitungseinheit überträgt, die aus den von der Erfassungseinrichtung erfassten Bildsignalen Daten über die Lage und Größe der plattenförmigen Gegenstände ermittelt und diese an die Steuereinrichtung weitergibt.

Zur Einbindung in eine Logistik ist zweckmäßigerweise eine Datenbank vorgesehen, in der Parameter der plattenförmigen Gegenstände hinterlegt sind. Die Steuereinrichtung kann dann die Bewegung des Aufnahmekopfes und die Saugeinrichtungen auf der Basis der hinterlegten Parameter und/oder der von der Bildbearbeitungseinheit weitergegebenen Daten steuern.

Als Parameter können in der Datenbank Parameter über die Art, Größe, Anzahl, Nummer und Stärke der plattenförmigen Gegenstände hinterlegt sein. Wenn die Handhabungsvorrichtung bei einer Kantenanleimmaschine verwendet wird, können darüberhinaus die Art und Weise der Bekantung und verleimtechnische Details wie zum Beispiel die Auswahl der Kanten hinterlegt werden.

Über die Kamera und die Bildbearbeitungseinheit kann ein auf ein Werkstück angebrachter Barcode entziffert und anhand der Datenbank die Werkstückeigenschaften identifiziert werden.

Ein Ausführungsbeispiel der Erfindung wird nachstehend anhand der Zeichnung näher erläutert. Es zeigen
- Fig. 1: eine Draufsicht auf eine Anlage zum Anleimen von Kanten auf plattenförmige Werkstücke, wobei sich eine Handhabungsvorrichtung an einem Auslauftisch befindet;
- Fig. 2: eine Draufsicht auf die Anlage zum Anleimen von Kanten auf plattenförmige Werkstücke, wobei sich die Handhabungsvorrichtung an einem Einlauftisch befindet;
- Fig. 3: eine Unteransicht eines Aufnahmekopfes;
- Fig. 4: eine teilweise Seitenansicht der Handhabungsvorrichtung, die den Aufnahmekopf umfasst;
- Fig. 5: eine Seitenansicht des Aufnahmekopfes bei einer ersten Aktivierung von Vakuumsaugtellern des Aufnahmekopfes;
- Fig. 6: eine Unteransicht von Fig. 5;
- Fig. 7: eine zweite Aktivierung von Vakuumsaugtellern des Aufnahmekopfes;
- Fig. 8: eine dritte Aktivierung von Vakuumsaugtellern des Aufnahmekopfes.
- Fig. 9: eine vierte Aktivierung von Vakuumsaugtellern des Aufnahmekopfes.

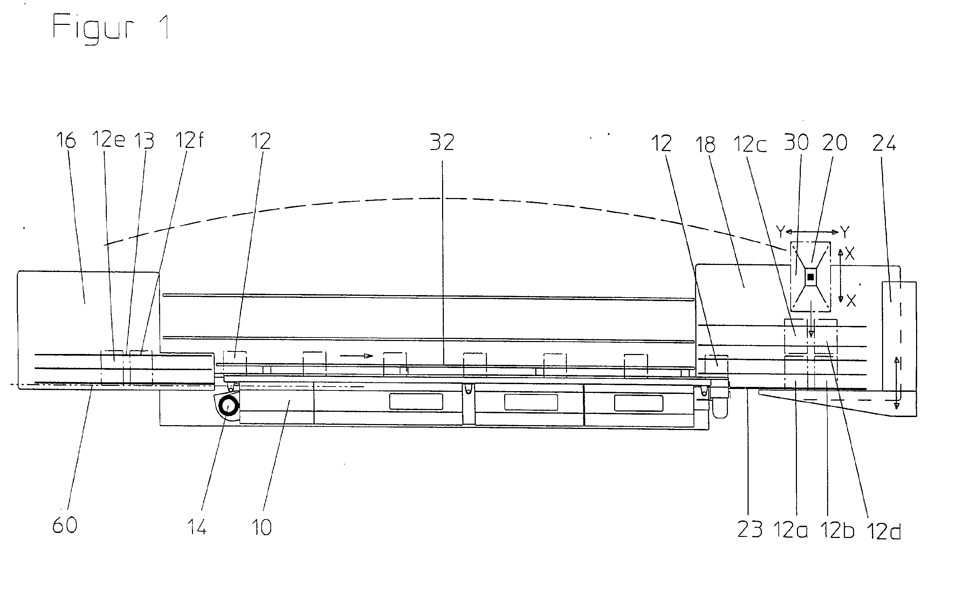

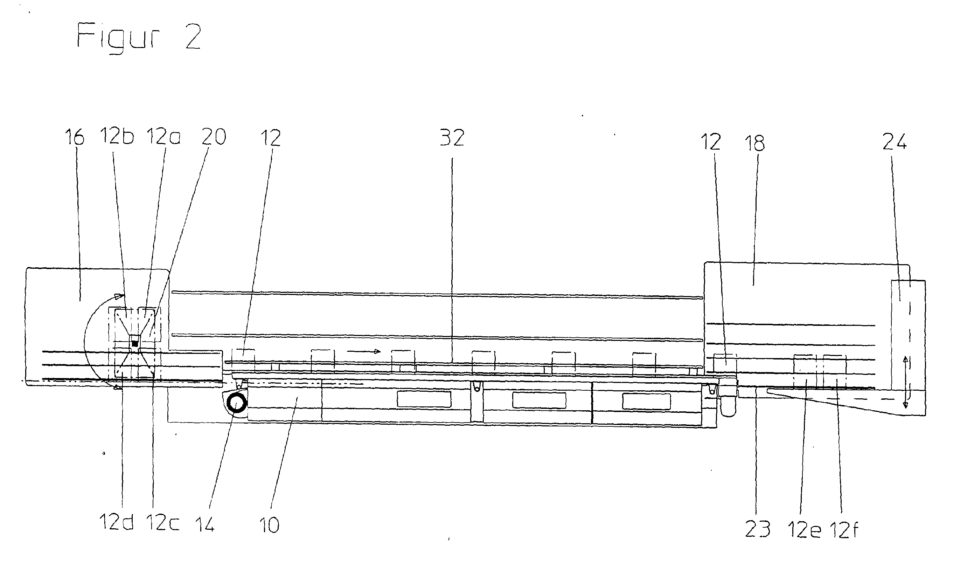

Die in Fig. 1 und 2 gezeigte Anlage zum Anleimen von Kanten auf plattenförmige Werkstücke umfasst eine einseitige Kantenanleimmaschine 10 zum Anleimen einer Kante auf eine Seite von rechteckigen Werkstücken 12, wie z.B. Möbelplatten.

Werkstücke 12e, 12f werden von einem Einlauftisch 16 mit definiertem Abstand in die Kantenanleimmaschine 10 eingeführt. Die Werkstücke 12e, 12f werden durch eine am Einlauftisch 16 vorgesehene Vorschubvorrichtung 13 mit an den Werkstücken angreifenden Vorsschubanschlägen in Richtung der Kantenanleimmaschine 10 bewegt, wobei sich die zu beleimende Kante auf dem Bearbeitungsniveau 60 der Kantenanleimmaschine 10 befindet. Die Bewegung der Vorschubvorrichtung 13 wird durch eine Steuereinrichtung (nicht gezeigt) gesteuert.

Anschließend wird eine Anleimkante von einem Kantenmagazin 14 zugeführt und in der Kantenanleimmaschine 10 auf eine Seite der rechteckigen Werkstücke 12 angeleimt und die Anleimkante dann auf übliche Weise z.B. mit einer Kappeinrichtung, einem Vorfräser und einem Feinfräser bearbeitet. Während des Durchlaufs durch die Kantenanleimmaschine 10 liegen die Werkstücke 12 auf Unterstützungsrollen 32 auf. Nach der Bearbeitung in der Kantenanleimmaschine werden die Werkstücke 12 aus der Kantenanleimmaschine 10 in deren Durchlaufrichtung auf einen Auslauftisch 18 befördert. An dem Auslauftisch 18 ist eine Vorschubvorrichtung 23 mit Vorschubanschlägen für einen Vorschb in Durchlaufrichtung und eine Querverschiebevorrichtung 24 vorgesehen, mit dem Werkstücke 12a, 12b, 12c, 12d senkrecht zur Durchlaufrichtung auf dem Auslauftisch 18 verschoben werden können, um Platz für weitere frisch beleimte Werkstücke 12 zu schaffen bzw. um die Platten für eine Handhabungsvorrichtung 20 zu positionieren. Die Bewegung der Vorschubvorrichtung 23 und der Querverschiebevorrichtung 24 wird ebenfalls von der Steuereinrichtung gesteuert.

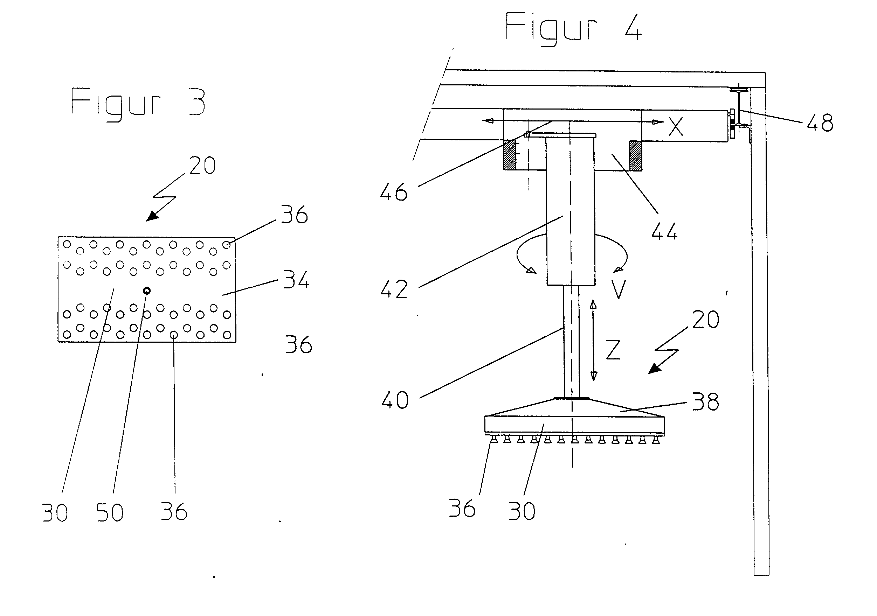

Um weitere Seiten der Werkstücke 12a, 12b, 12c, 12d mit einer Kante zu beleimen, müssen die Werkstücke 12a, 12b, 12c, 12d von dem Auslauftisch 18 zu dem Einlauftisch 16 zurückbefördert und zur Beleimung einer weiteren Kante um 90° beziehungsweise 180° verdreht wieder auf dem Einlauftisch 16 abgelegt werden. Hierzu ist die Handhabungsvorrichtung 20 vorgesehen, die nachstehend anhand der Fig. 3 bis 8 näher erläutert wird.

Wie es in den Fig. 3 und 4 gezeigt ist, umfasst die Handhabungsvorrichtung 20 einen Aufnahmekopf 30 mit einer horizontal angeordneten rechteckigen Bodenfläche 34. An der Bodenfläche 34 sind zwei parallel zu den Längsrändern verlaufende Anordnungen von Vakuumsaugtellern 36 vorgesehen. Jede Anordnung umfaßt vier parallel zu den Längsrändern der Bodenfläche 34 verlaufende Reihen von Vakuumsaugtellern 36. Die an den entsprechenden Längsrand der Bodenfläche 34 angrenzende Reihe umfasst sieben Vakuumsaugteller 36, die in gleichmäßigem Abstand zueinander angeordnet sind. Die zweite Reihe umfasst sechs Vakuumsaugteller 36, die zwischen den Vakuumsaugtellern 36 der ersten Reihe zur Mitte der Bodenfläche 34 hin versetzt angeordnet sind. Die dritte Reihe der Vakuumsaugteller 36 ist näher zur Mitte der Bodenfläche 34 angeordnet, als die zweite Reihe, wobei die Vakuumsaugteller 36 denen der ersten Reihe entsprechend angeordnet sind. Die Vakuumsaugteller 36 der innersten Reihe sind den Vakuumsaugtellern 36 der zweiten Reihe entsprechend angeordnet.

Die Bodenfläche 34 schließt ein Greifergehäuse 38 nach unten ab. Mit dem Greifergehäuse 38 ist mittig eine sich vertikal erstreckende Hubstange 40 verbunden, die in einem Hubzylinder 42 vertikal in Z-Richtung verschiebbar geführt ist. Der Hubzylinder 42 ist in einem Läufer 44 um seine vertikale Achse drehbar angeordnet. Der Läufer 44 ist in X-Richtung, das heißt senkrecht zur Durchlaufrichtung der Kantenanleimmaschine 10, verfahrbar an einer Querschiene 46 verschiebbar gelagert, die ihrerseits mit ihren Stirnseiten parallel zur Durchlaufrichtung der Kantenanleimmaschine 10 in Y-Richtung (Fig. 1) verfahrbar auf Längsschienen eines Längsportal 48 verschiebbar gelagert ist. Das Längsportal 48 erstreckt sich über den Bereich zwischen dem Einlauftisch 16 und dem Auslauftisch 18 hinaus.

Aufgrund der oben beschriebenen Konstruktion wird die Bewegung des Aufnahmekopfes 30 mit Hilfe von jeweiligen Antriebsmotoren über vier Achsen (X-, Y-, Z-Achse und Drehachse) durch die Steuereinrichtung über eine entsprechende Achseninterpolation ausgeführt.

Die Vakuumsaugteller 36 sind jeweils über im Greifergehäuse 38 vorgesehene Magnetventile mit einer Unterdruckeinrichtung verbunden. Jedes Magnetventil ist einzeln über eine Datenleitung mit der Steuereinrichtung verbunden, so dass die Steuereinrichtung jedes Magnetventil selektiv betätigen kann, um die Vakuumsaugteller 36 mit der Unterdruckeinrichtung zu verbinden oder diese Verbindung zu unterbrechen.

Wie es in Fig. 3 gezeigt ist, ist zentral in der Bodenfläche 34 des Aufnahmekopfes 30 eine CCD-Kamera 50 angeordnet, die mit einer Bildverarbeitungseinheit in Verbindung steht, die die Signale der CCD-Kamera 50 verarbeitet und entsprechende Daten an die Steuereinrichtung weitergibt.

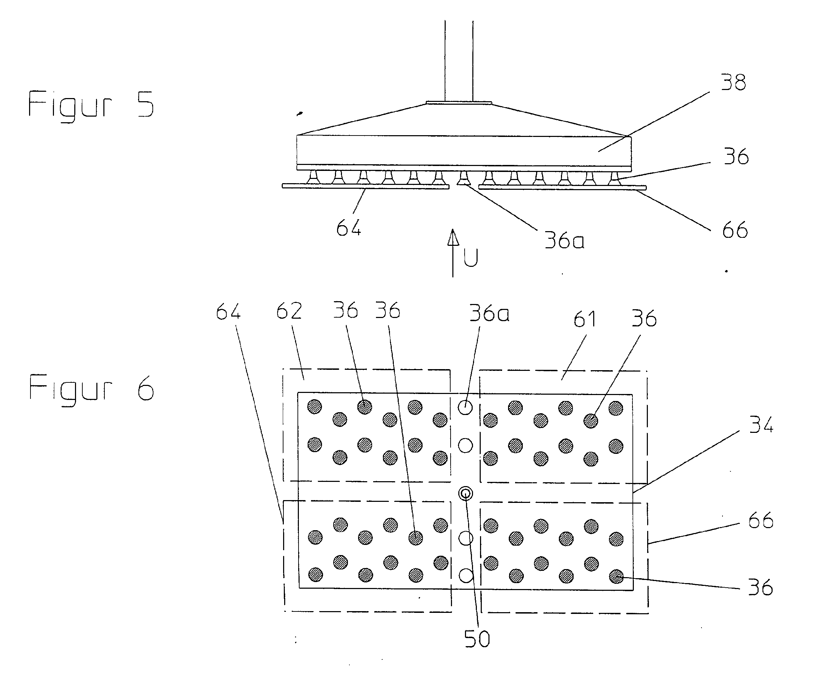

Die Fig. 5 bis 8 zeigen verschiedene Beispiele der Aktivierung der Vakuumsaugteller 36 zur Aufnahme und zum Ablegen von Möbelplatten unterschiedlicher Größe. Zur Aufnahme von Werkstücken werden jeweils nur die Vakuumsaugteller aktiviert, die sich oberhalb der Fläche der jeweiligen Möbelplatten befinden. Durch Deaktivierung der einer Möbelplatte zugeordneten Vakuumsaugteller 36 kann die entsprechende Möbelplatte selektiv einzeln oder zusammen mit anderen Möbelplatten abgelegt werden.

Die Bodenfläche 34 des Aufnahmekopfes 30 hat beispielsweise eine Größe von 1200 mm auf 700 mm. Zur Aufnahme von vier Möbelplatten 61, 62, 64, 66 mit einer Größe von 450 auf 600 mm, die wie in Fig. 5 und 6 gezeigt paarweise im Abstand zueinander angeordnet sind, werden alle Saugteller 36 bis auf die mittleren zwei Saugteller 36a jeder Anordnung aktiviert. Die aktivierten Vakuumsaugteller 36 sind schraffiert dargestellt.

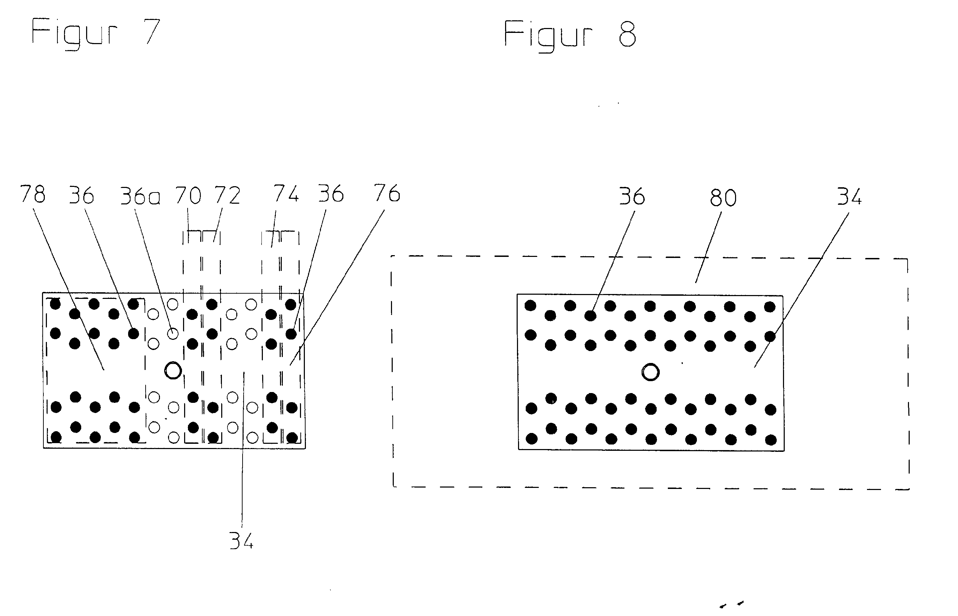

Fig. 7 zeigt die Aktivierung der Vakuumsaugteller 36 zur Aufnahme und Ablage von vier schmalen Möbelplatten 70, 72, 74, 76 quer zur Längsrichtung der Bodenfläche 34 und einer Möbelplatte 78 mit einer Größe von etwa 600 mm auf 400 mm. Die schwarz dargestellen Vakuumsaugteller 36 sind aktiviert. Es ist deutlich zu erkennen, daß nur die Vakuumsaugteller 36 aktiviert werden, die sich im Bereich der Fläche der jeweiligen Möbelplatten befinden. Die sich außerhalb dieses Bereiches befindlichen Vakuumsaugteller 36a sind nicht aktiviert.

Fig. 8 zeigt die Aktivierung aller Vakuumsaugteller 36 zur Aufnahme einer Möbelplatte, deren Fläche größer ist als die der Bodenfläche 34.

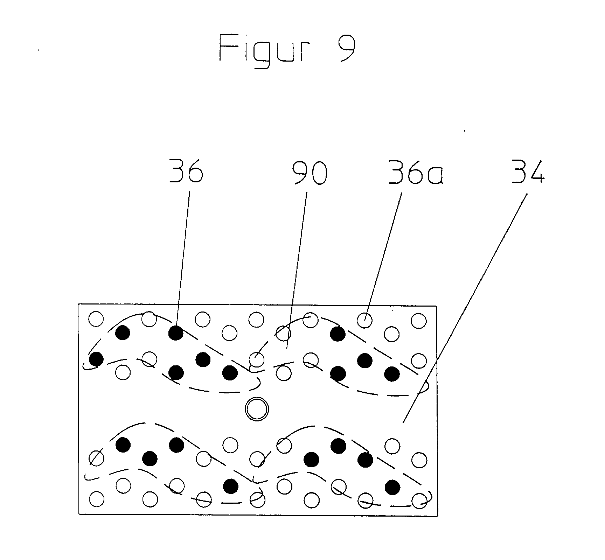

Fig. 9 zeigt schließlich die Aktivierung einzelner Vakuumsaugteller zur Aufnahme von unregelmäßigen Teilen, die von einer Laserschneid- bzw. einer Wasserstrahlschneidmaschine geschnitten worden sind.

Die Funktionsweise der Handhabungsvorrichtung 20 wird nachstehend anhand eines Beispiels erläutert, bei dem Möbelplatten 12a, 12b, 12c, 12d am Auslauftisch 18 der Kantenanleimmaschine 10 von der Handhabungsvorrichtung 20 abgehoben und am Einlauftisch 16 um 180° gedreht abgelegt werden, damit eine Kante auf die Seite der Möbelplatten 12a, 12b, 12c, 12d aufgeleimt werden kann, die der Seite gegenüberliegt, die im vorhergehenden Bearbeitungszyklus angeleimt wurde.

Es wird davon ausgegangen, dass auf dem Auslauftisch vier Möbelplatten 12a, 12b, 12c, 12d in parallelen Paaren senkrecht zur Durchlaufrichtung der Kantenanleimmaschine 10 nacheinander angeordnet sind. Zwei Möbelplatten 12e, 12f liegen am Einlauftisch 16 in geringem Abstand in Durchlaufrichtung gesehen nebeneinander, wobei sich die zu beleimende Kante auf dem Bearbeitungsniveau 60 der Kantenanleimmaschine 10 befindet. Die Möbelplatten 12e, 12f werden in definiertem Abstand durch die am Einlauftisch 16 vorgesehenen Vorschubanschläge der Vorschubvorrichtung 13 in Richtung der Kantenanleimmaschine 10 bewegt, wobei ihre Position durch die Steuereinrichtung bestimmt wird.

Die am Auslauftisch 18 befindlichen Werkstücke 12a, 12b, 12c, 12d wurden von den beiden Schiebemechanismen 23, 24 in das in Fig. 1 gezeigte Muster gebracht, so dass für den Flächenaufnahmekopf 30 eine möglichst effiziente Beladung bewerkstelligt werden kann. Diese Muster werden je nach Teilegröße über die Datenbank vorgegeben und an die Steuereinrichtung des Auslauftisches 18 weitergegeben. Das in Fig. 1 gezeigte Schlichtmuster ist im Detail in Fig. 6 wiedergegeben. Nach Freigeben der Werkstücke zur Übernahme durch die Handhabungsvorrichtung 20 kann diese die Werkstücke nach Ansteuern der vorgegebenen Position über die Saugteller 36 aufnehmen und die Werkstücke in Richtung Einlauftisch 16 transportieren. Je nach zu beleimender Kante müssen die Werkstücke nun 90 bzw. 180° gedreht auf dem Einlauftisch 16 positioniert werden.

Dabei werden sie so hintereinander durch selektive Deaktivierung der Saugteller 36 abgelegt, dass die Werkstücke einzeln in bestimmten Abstand durch die Anschläge 13 des Einlauftisches 16 erfasst werden und auch in einem bestimmten Abstand in die Kantenleimmaschine 10 eingebracht werden können.

Nach fertiger Entladung kehrt der Aufnahmekopf 30 in den Bereich des Auslauftisches 18 zurück und übernimmt dort die nächsten am Auslauftisch 18 fertig geschlichteten Werkstücke zur weiteren Bearbeitung oder auch nach fertiger Bearbeitung zum Stapeln und/oder zur Übergabe an eine weitere Bearbeitungsstation auf.

Die Funktionsweise der erfindungsgemäßen Handhabungsvorrichtung wurde anhand des Transportes der Möbelplatten von dem Auslauftisch 18 zu dem Einlauftisch 16 nur beispielsweise erläutert. Die Handhabungsvorrichtung 20 ist darüber hinaus geeignet, Möbelplatten von dem Auslauf einer Plattensäge oder einem Plattenmagazin selektiv aufzunehmen und auf dem Einlauftisch 16 der Kantenanleimmaschine 10 abzulegen. Bereits vollständig mit einer Kante versehene Möbelplatten können von dem Auslauftisch 18 abgenommen und in einer Zwischenablage oder einer Bohrvorrichtung zur weiteren Bearbeitung abgelegt werden.

Die Positionierung der Möbelplatten wird durch eine Maschinendatenbank koordiniert, in der maschinenspezifische und -relevante Abläufe zusammengefasst werden. Die Steuereinrichtung steuert neben der Handhabungsvorrichtung 20 die Vorschubvorrichtungen an dem Einlauftisch 16 und dem Auslauftisch 18. Auch die Bearbeitung in einer vorhergehenden Plattensäge, die Ablage der Zuschnitte auf einem Stapel und die Bearbeitung in einer nachfolgenden Bohrvorrichtung kann durch die Steuereinrichtung koordiniert werden. Die Position der Möbelplatten wird beim Aufnehmen durch die Bildverarbeitungseinheit anhand der Signale der CCD-Kamera analysiert. Die Steuereinrichtung kann darüber hinaus auch auf die Daten der Vorschubvorrichtung am Auslauftisch zurückgreifen. In diesem Fall hat die Bildverarbeitung lediglich Kontrollfunktion.

Zur Identifizierung wird auf der Oberfläche jedes Werkstücks ein Barcode aufgebracht, der teilespezifische bzw. auftragsrelevante Daten, wie z.B. Teilegröße, Anzahl, Plattenstärke etc. enthält. Die Steuereinrichtung steuert die einzelnen Vorrichtungen mittels einer Optimierungssoftware, die anhand der Datenbanken den Ablauf der einzelnen Vorrichtungen in Abhängigkeit von eingegebenen Aufträgen optimal koordiniert.

Bei einem optimalen Raster für die Möbelindustrie sind die Saugteller 36 wie Fig. 3 verteilt. Es sind vier Doppelreihen vorgesehen, wobei die beiden Reihen einer Doppelreihe um 45mm in Breitenrichtung und um 90 mm in Längsrichtung zueinander versetzt sind. Auf einer Fläche von 1200 x 700 mm sind somit ca. 52 Saugteller angeordnet.

## Patentansprüche

1. Handhabungsvorrichtung zur Manipulation plattenförmiger Gegenstände mit einem bewegbaren Aufnahmekopf (30), dessen Bewegung von einer Steuereinrichtung gesteuert wird und an dessen Unterseite eine Vielzahl von Saugeinrichtungen (36) in einem definierten Raster in einer Ebene vorgesehen sind, die über eine serielle Datenleitung mit der Steuereinrichtung verbunden sind, wobei alle Saugeinrichtungen (36) selektiv und einzeln mittels der Steuereinrichtung aktivierbar und deaktivierbar sind.

2. Vorrichtung nach Anspruch 1, **dadurch gekennzeichnet, dass** die Saugeinrichtungen von Vakuumsaugtellern (36) gebildet werden.

3. Vorrichtung nach einem der vorhergehenden Ansprüche, **dadurch gekennzeichnet, dass** an dem Aufnahmekopf (30) eine Erfassungseinrichtung zur Erfassung der Lage und Größe plattenförmiger Gegenstände vorgesehen sind.

4. Vorrichtung nach Anspruch 3, **dadurch gekennzeichnet, dass** die Erfassungseinrichtung von einer Kamera (50) gebildet wird, die Bildsignale an eine Bildbearbeitungseinheit überträgt, die aus den von der Erfassungseinrichtung erfassten Bildsignalen Daten über die Lage und Größe der plattenförmigen Gegenstände ermittelt und diese an die Steuereinrichtung weitergibt.

5. Vorrichtung nach einem der vorhergehenden Ansprüche, **gekennzeichnet durch** eine Datenbank, in der Parameter der plattenförmigen Gegenstände (12) hinterlegt sind, wobei die Steuereinrichtung die Bewegung des Aufnahmekopfs (30) und die Saugvorrichtungen (36) auf der Basis der hinterlegten Parameter steuert.

6. Vorrichtung nach Anspruch 4, **gekennzeichnet durch** eine Datenbank, in der Parameter der plattenförmigen Gegenstände (12) hinterlegt sind, wobei die Steuereinrichtung die Bewegung des Aufnahmekopfs (30) und die Saugeinrichtungen (36) auf der Basis der hinterlegten Parameter und/oder der von der Bildbearbeitungseinheit weitergegebenen Daten steuert.

7. Vorrichtung nach Anspruch 6, **dadurch gekennzeichnet, dass** in der Datenbank Parameter über die Größe, Anzahl, Nummer, Stärke der plattenförmigen Gegenstände hinterlegt sind.

8. Vorrichtung nach einem der vorhergehenden Ansprüche, **dadurch gekennzeichnet, dass** die Steuereinrichtung direkt mit einer CAD-Schnittstelle gekoppelt ist, so dass variable Konturen mit Freiformflächen vom Aufnahmekopf (30) einzeln oder zusammen aufgenommen und einzeln oder zusammen abgelegt werden können.

9. Kantenanleimmaschine mit einer Handhabungsvorrichtung nach einem der Ansprüche 1 bis 8 zum Beschicken, Entladen und Abstapeln von Möbelplatten und /oder zum Wechseln von Kantenmagazinen für Rollenkanten.

10. Laserschneidemaschine mit einer Handhabungsvorrichtung nach einem der Ansprüche 1 bis 8 zum Entladen von plattenförmigen Gegenständen.

11. Wasserstrahlschneidemaschine mit einer Handhabungsvorrichtung nach einem der Ansprüche 1 bis 8 zum Entladen von plattenförmigen Gegenständen.
